## Europäisches Patentamt

## European Patent Office

## Office européen des brevets

(11) Veröffentlichungsnummer: **0 005 478**
B1

(12) **EUROPÄISCHE PATENTSCHRIFT**

(45) Veröffentlichungstag der Patentschrift: **09.09.81**

(21) Anmeldenummer: **79101320.4**

(22) Anmeldetag: **02.05.79**

(51) Int. Cl.³: **F 15 B 15/20, G 01 D 5/24, B 23 Q 15/00**

(54) Einrichtung mit einem Zylinder, einem in diesem verschiebbaren Kolben und einem im wesentlichen im Zylinder angeordneten Messwandler.

(30) Priorität: **11.05.78 CH 5125/78**

(43) Veröffentlichungstag der Anmeldung:
**28.11.79 Patentblatt 79/24**

(45) Bekanntmachung des Hinweises auf die Patenterteilung:
**09.09.81 Patentblatt 81/36**

(84) Benannte Vertragsstaaten:
**AT DE FR GB NL SE**

(56) Entgegenhaltungen:
**DE - A - 1 813 153**
**DE - A - 2 820 040**
**FR - A - 1 525 363**
**US - A - 3 564 397**
**US - A - 3 774 238**

**MACHINE DESIGN, Band 31, no. 26, 24 December 1959 Cleveland "Built-in transducer", Seite 99.**

(73) Patentinhaber: **Rotovolumetric AG Weicheln CH-6030 Ebikon (CH)**

(72) Erfinder: **Lötscher, Bernhard Mühlebergstrasse 88 CH-8450 Andelfingen (CH)**

(74) Vertreter: **Eder, Carl E. et al, Patentanwaltsbüro Eder & Cie Münchensteinerstrasse 2 CH-4052 Basel (CH)**

Einrichtung mit einem Zylinder, einem in diesem verschiebbaren Kolben und einem im wesentlichen im
Zylinder angeordneten Messwandler

Die Erfindung betrifft eine Einrichtung mit einem Zylinder, einem verschiebbar in diesem geführten, durch ein Strömungsmittel Verschiebbaren, mit einer Längsöffnung versehenen Kolben und einem im wesentlichen im Zylinder angeordneten Messwandler, der zwei gegeneinander verschiebbare Teile aufweist, von denen der eine am Zylinder befestigt ist und in die Längsöffnung des Kolbens hineinragt und der andere am Kolben befestigt oder durch den Kolben selbst gebildet ist.

Solche Zylinder werden beispielsweise zum Heben von Lasten, zum Verschliessen von Verschlüssen oder zum Verstellen von Werkzeugen von Bau- und Werkzeugmaschinen verwendet.

Aus der schweizerischen Patentschrift 488 999 und der entsprechenden US-Patentschrift 3 654 549 ist eine Einrichtung mit einem Zylinder und einem im Zylinder eingebauten Messwandler bekannt. Bei einer Ausführung der vorbekannten Einrichtung wird ein induktiver Messwandler verwendet, von dem der eine Teil am Zylinder und der andere am Kolben befestigt ist. Der am Zylinder befestigte Teil des Messwandlers weist zwei zum Zylinder koaxiale, hohle, hintereinander angeordnete Spulen auf. Der am Kolben befestigte Messwandlerteil weist einen ferromagnetischen Kern auf, der je nach der Kolbenstellung mehr oder weniger tief in die beiden Spulen hineinragt. Die beiden Spulen sind mit einer Wechselspannungsquelle und einer Brückenschaltung verbunden, von der ein Signal abgenommen werden kann, das ein Mass für die Kolbenstellung gibt.

Die für die vorbekannte Einrichtung erforderlichen Spulen sind relativ teuer. Dies ist insbesondere dann der Fall, wenn der Kolben einen grossen Hub aufweist. Ein weiterer Nachteil der vorbekannten Einrichtung besteht darin, dass mindestens drei Spulenanschlüsse über elektrisch isolierte Durchführungen aus dem Zylinder herausgeführt werden müssen. Diese Durchführungen sind vor allem dann, wenn im Zylinder mit grossen Drücken gearbeitet wird, aufwendig und störanfällig. Des weiteren wäre noch zu vermerken, dass eine Einrichtung mit induktiven Messwandlern empfindlich gegen äussere Magnetfelder und ferromagnetische Teile von anderen Maschinen und Geräten sein kann, so dass leicht Messfehler entstehen können.

Aus der französischen Patentschrift 1 525 363 ist ferner ein Hydraulikzylinder mit einem Kolben und einem kapazitiven Messwandler bekannt. Der letztere wird durch einen am Zylinder befestigten und leitend mit diesem verbundenen Metallstab und eine hülsenförmige Metallfolie gebildet, die in einer Öffnung des Kolbens angeordnet und an einer Isolation befestigt ist. Zwischen dem Stab und der Folie ist ein Zwischenraum vorhanden, der von der Hydraulikflüssigkeit ausgefüllt wird, so dass die letztere das Dielektrikum bildet. Die Elektronik-Vorrichtung zum Messen der Kapazität weist einen Schwingkreis auf, der durch den kapazitiven Messwandler, einen Trimmkondensator und eine Spule gebildet wird. An die letztere kann ein Frequenzgenerator angekoppelt werden.

Die Publikation "Machine Design", Seite 99, Band 31, no. 26, 1959, offenbart einen Zylinder mit einem Kolben, der vermutlich mit Öl verstellbar ist. Am Zylinder ist ein Metallstab isoliert befestigt, dessen freies Ende in den hohlen Kolben und Kolbenschaft hineinragt und mit einem Isolierring geführt ist. Mit einem nicht näher beschriebenen Messgerät wird die Kapazität zwischen dem Metallstab und dem Kolben gemessen, der durch einen Federkontakt leitend mit dem Zylinder verbunden ist.

Bei den in der französischen Patentschrift 1 525 363 und der Publikation "Machine Design" geoffenbarten Einrichtungen ist zwischen der am Zylinder befestigten und der am Kolben befestigten Elektrode ein im Querschnitt ringförmiger Hohlraum vorhanden, der als Dielektrikum dienendes Öl enthält. Die Hydrauliköle haben nun aber einen relativ kleinen Isolationswiderstand, der sich zudem mit der Temperatur und der Alterung des Öls stark ändert. Ein kleiner Isolationswiderstand, der sich zudem noch ändert, verschlechtert jedoch die Messgenauigkeit.

Ferner ergeben sich bei den aus der französischen Patentschrift 1 525 363 und der Publikation "Machine Design" bekannten Einrichtungen Messfehler, weil die Messwandler-Elektroden sich beim Betrieb infolge des Eigengewichts sowie aus andern Gründen verbiegen können und weil sich auch schon bei der Herstellung Abweichungen von im Querschnitt kreisrunden, achsgeraden und koaxialen Zylinderflächen ergeben können.

Der Erfindung liegt nun die Aufgabe zugrunde, eine Einrichtung mit einem Zylinder, einem durch ein Strömungsmittel verschiebbaren Kolben und einem kapazitiven Messwandler zu schaffen, der eine hohe Messgenauigkeit ergibt, die insbesondere unabhängig von der Beschaffenheit eines als Strömungsmittel verwendeten Hydrauliköls ist.

Diese Aufgabe wird durch eine Einrichtung gelöst, die erfindungsgemäss durch die Merkmale des Anspruchs 1 gekennzeichnet ist.

Bei der erfindungsgemässen Einrichtung wird also das Dielektrikum zwischen den beiden Messwandler-Elektroden im wesentlichen durch eine Hülle gebildet. Es kann daher höchstens noch ein ganz dünner Film des verwendeten Hydraulik-Strömungsmittels zwischen die beiden Messwandler-Elektroden gelangen, der nur wenig zum Dielektrikum beiträgt. Auf diese Weise können störende Einflüsse des Strömungsmittels auf die Messung praktisch vollständig verhindert werden.

Der im wesentlichen aus Metall bestehende, mit dem Massenanschluss des Elektronikteils verbindbare Zylinder bildet zudem einen Faradaykäfig, der Störungen durch externe elektrische Felder weitgehend verhindert. Die Kapazität des Messwandlers kann daher unter Verwendung einer Wechselspannung mit einer relativ kleinen Frequenz gemessen werden. Dies wiederum ermöglicht, die Kapazitätsänderungen mittels eines kapazitiv gegengekoppelten Differentialverstärkers zu messen.

Im übrigen ergeben sich weitere vorteilhafte Ausgestaltungen der Erfindung aus den abhängigen Ansprüchen.

Der Erfindungsgegenstand wird nun anhand eines in der Zeichnung dargestellten Ausführungsbeispiels erläutert. In der Zeichnung zeigen

die Figur 1 einen Längsschnitt durch einen Zylinder mit einem kapazitiven Messwandler,

die Figur 2 einen vergrösserten Ausschnitt aus der Figur 1 und

die Figur 3 das Schaltschema des Elektronikteils der Einrichtung.

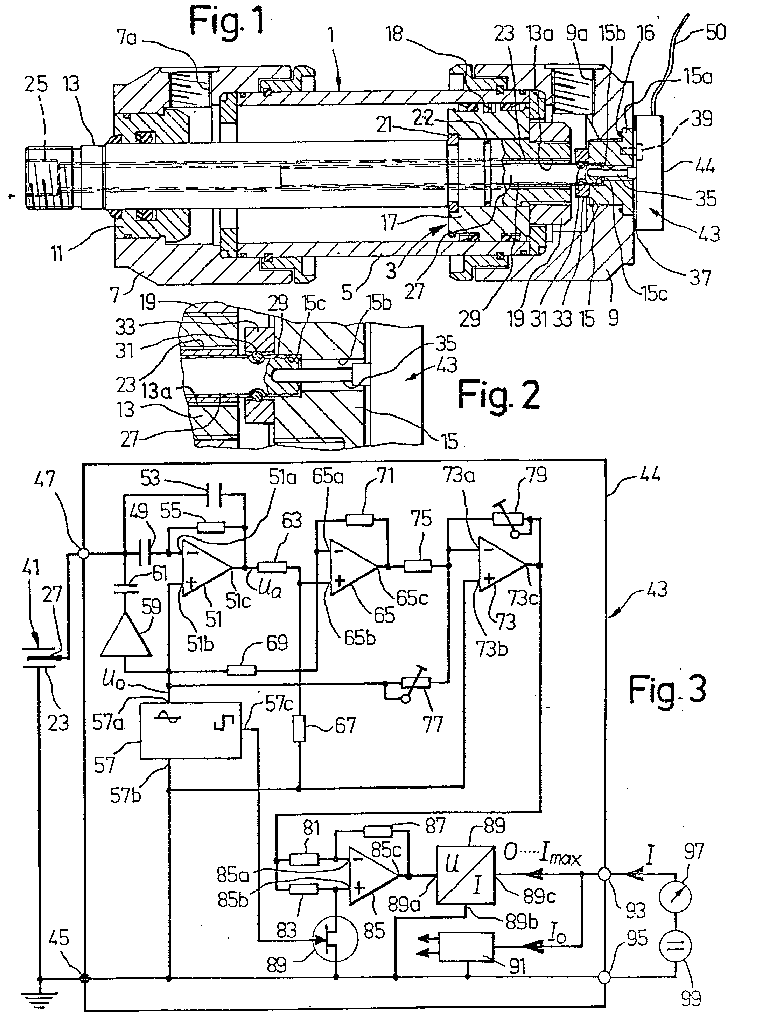

In der Figur 1 bezeichnet 1 einen Zylinder und 3 einen verschiebbar in diesem geführten Kolben. Der Zylinder 1 besteht im wesentlichen aus metallischen, elektrisch leitenden Teilen und weist insbesondere einen metallischen Mantel 5 auf, der beidenends mit ebenfalls metallischen Kappen 7 und 9 versehen ist. In die Kappe 7 ist eine metallische Buchse 11 eingesetzt, die mit verschiedenen Dichtungsringen versehen ist und eine dichte Gleitführung für den metallischen Schaft 13 des Kolbens 3 bildet. In die Kappe 9 ist eine ein Aussengewinde aufweisende, metallische Buchse 15 eingeschraubt. Die Buchse 15 ist mit einem Kragen 15a versehen und bei diesem mittels einer Dichtung 16 gegen die Kappe abgedichtet. Die Längsöffnung 15b der Buchse 15 ist an ihrem dem Innenraum des Zylinders zugewandten Ende mit einer Erweiterung 15c versehen. Ferner sind die Kappen 7 und 9 mit Anschlussöffnungen 7a, 9a für die Zufuhr und Ableitung eines elektrisch isolierenden Strömungsmittels, etwa Hydrauliköl, versehen, das dazu dient, den Kolben mit Druck zu beaufschlagen und zu verschieben. Dabei wird beispielsweise mit einem Druck bis zu 300 Bar gearbeitet.

An dem sich in Innnern des Zylinders 1 befindlichen Ende des Kolbenschaftes 13 ist mittels einer auf den Schaft 13 aufgeschraubten Mutter 19, eines Federrings 21 und einer Dichtung 22 ein metallischer Ring 17 dicht befestigt, der den Kopf des Kolbens bildet und verschiebbar und dicht im Mantel 5 geführt ist. Der Ring 17 ist im Bereich seiner zylindrischen Gleitfläche mit einer Vertiefung versehen, in der ein federnder Schleifkontakt 18 angeordnet ist, der eine elektrisch leitende Verbindung zwischen dem Ring 17 und dem Mantel 5 erstellt. Der Kolben 3 oder genauer gesagt, der Schaft 13, ist mit einer durchgehenden Längsöffnung 13a versehen, die durch eine zum Zylindermantel 5 koaxiale Bohrung begildet ist. In dieser ist ein metallisches, elektrisch leitendes, zum Mantel 5 koaxiale Bohrung gebildet ist. In dieser ist ein das insbesondere eine genau zylindrische Innenfläche aufweist. Das eine Ende des Rohres 23 ist bündig mit dem inneren Kolbenende, d.h. mit demjenigen Ende des Schaftes 13, an dem der Ring 17 befestigt ist. Das andere Ende des Rohres 23 ist mit einem Zapfen 25 befestigt, der am äusseren Ende des Schaftes 13 in eine Erweiterung der Längsöffnung 13a eingeschraubt ist und diese dicht abschliesst. Das Rohr 23 ist in der Nähe seines befestigten Endes mit mindestens einer Öffnung für den Druckausgleich der Hydraulikflüssigkeit versehen. Das Rohr 23 bildet die eine Elektrode eines kapazitiven Messwandlers und ist elektrisch leitend mit dem, abgesehen von den Dichtungsringen, metallischen Kolben 3 und über diesen leitend mit den metallischen Teilen des Zylinders 1 und insbesondere dem Mantel 5 verbunden.

Die andere Elektrode des Kapazitiven Messwandlers wird durch einen im Zylinder 1 angeordneten, zu diesem koaxialen, metallischen, elektrisch leitenden, runden Stab 27 gebildet, der mit einer Hülle 29 aus elektrisch isolierendem, fluorhaltigem Kunststoff beispielsweise Polytetrafluoräthylen, versehen ist. Das eine Ende des Stabes 27 sitzt in der Erweiterung 15c der Buchsenlängsöffnung 15b, wie es besonders deutlich in der Figur 2 ersichtlich ist. Der Stab 27 ist dort, wo er aus der Buchse 15 herausragt, mit einer ringförmigen Rille versehen, in die ein Federring 31 eingesetzt ist, der seinerseits von einem metallischen Ring 33 gehalten wird, der mit Schrauben an der Buchse 15 festgeschraubt ist. Die Hülle 29, die sich bis auf die Stirnseite des in der Buchse 15 sitzenden Stabendes erstreckt, isoliert den Stab 27 gegen die Buchse 15 sowie den Federring 31 und dient gleichzeitig als Dichtung. Der Stab 27 ist also unbeweglich und dicht am Zylinder 1 befestigt und gegen den Zylinder elektrisch isoliert. Der Stab 27 ragt in das Rohr 23 hinein und erstreckt sich bis in die Nähe des der Kappe 9 abgewandten Endes des Mantels 5. Der Stab 27 ragt also in jeder möglichen Kolbenstellung teilweise in die Längsöffnung 13a und das Rohr 23 hinein. Die fest auf der Aussenfläche des Stabes 27 sitzende Hülle 29 und die Innenfläche des Rohres 23 bilden zusammen einen annähernd spielfreien Gleitsitz. Beim Betrieb des Zylinders gelangt Hydrauliköl zwischen die Hülle 29 und die Innenfläche des Rohres 23, so dass ein Ölfilm entsteht. Das Dielektrikum des kapazitiven Messwandlers wird durch die Hülle 29 und diesen Ölfilm gebildet. Die Hülle 29 ist derart ausgebildet, dass ihre Dicke etwa 3 bis 10 Mal grösser ist als diejenige des Ölfilms. Zwischen der Aussenfläche des Rohres 23 und der Innenfläche der Längsöffnung 13a ist,

abgesehen von der Befestigungsstelle beim Zapfen 25, ein freier Ringspalt vorhanden. Das Rohr 23 besteht ferner aus einem relativ dünnwandigen, federnd biegbaren Material, so dass es durch den Stab selbsttätig zentriert wird.

Am Zylinder 1 ist ein Elektronikteil 43 mit einem dichten Metallgehäuse 44 befestigt, nämlich mittels Schrauben 39 an der Buchse 15 festgeschraubt. Dort, wo der Rand des Elektronikteils 43 auf der Stirnfläche der Kappe 9 aufliegt, ist ein Dichtungsring 37 angeordnet. Am Stab 27 ist das eine Ende eines elektrisch leitenden Stiftes 35 befestigt, der die Buchse 15 berührungslos durchdringt und gegen das Gehäuse 44 isoliert in den Elektronikteil 43 hineinragt. Der Elektronikteil 43 ist durch ein zweiadriges Kabel 50 mit weiteren Elementen verbunden, wie noch erläutert wird.

Das am Kolben 3 befestigte Rohr 23 und der am Zylinder 1 befestigte Stab 27 bilden, wie bereits erwähnt, zusammen einen kapazitiven Messwandler, dessen Kapazität von der Kolbenstellung abhängig ist: Wenn sich der Kolben 3 in der gezeichneten Stellung befindet, in der er so weit als möglich in den Zylinder 1 hineingeschoben ist, hat die Kapazität des Messwandlers ihren Maximalwert. In der anderen Kolbenstellung hat die Kapazität des Messwandlers, zu der auch noch die Kapazität der Durchführung kommt, ihren Minimalwert. Wenn der Kolben in der Figur 1 von links nach rechts verschoben wird, nimmt die Kapazität des Messwandlers linear zu. Der Elektronikteil 43 erzeugt beim Betrieb ein elektrisches Signal, nämlich einen eingeprägten Strom, der ein Mass für die Kolbenstellung, bzw. den Kolbenweg gibt.

Die Ausbildung und Funktionsweise des Elektronikteils 43 soll nun aufgrund der Figur 3 erläutert werden. In dieser bezeichnet 41 schematisch den kapazitiven Messwandler. Die durch das Rohr 23 gebildete Elektrode des Messwandlers 41 ist über den Kolben 3 und insbesondere den Schleifkontakt 18 elektrisch leitend mit dem Zylinder 1 verbunden, der seinerseits über die Schrauben 39 mit dem Metallgehäuse, sowie dem Massenanschluss 45 des Elektronikteils 43 verbunden ist. Die durch den am Zylinder 1 befestigten Stab 27 gebildete Elektrode des Messwandlers 41 ist durch den Stift 35 leitend mit dem Eingangs- oder Messanschluss 47 des Elektronikteils 43 verbunden. Der Eingangsanschluss 47 ist über einen Kondensator 49 mit dem invertierenden Eingang 51a, sowie über einen Gegenkopplungskondensator 53 mit dem Ausgang 51c eines Differentialverstärkers 51 verbunden. Der invertierende Eingang 51a und der Ausgang 51c sind ferner durch einen hochohmigen Widerstand 55 miteinander verbunden, der zusammen mit dem Kondensator 49 zur Stabilisierung des Arbeitspunktes dient.

Der nicht-invertierende Eingang 51b des Differentialverstärkers 51 ist mit dem Ausgang 57a eines Oszillators 57 verbunden, der auch einen mit dem Massenanschluss 45 verbundenen Ein- und Ausganganschluss 57b aufweist. Der Ausgang 57a des Oszillators 57 ist noch über einen Verstärker 59 und einen Kondensator 61 mit dem Eingangsanschluss 47 verbunden.

Der Ausgang 51c des Differentialverstärkers 51 ist über einen Widerstand 63 mit dem nicht-invertierenden Eingang 65b eines Differentialverstärkers 65 verbunden. Der Eingang 65b ist ferner über einen Widerstand 67 mit dem Massenanschluss 45 verbunden. Der invertierende Eingang 65a des Differentialverstärkers 65 ist über einen Widerstand 69 mit dem Oszillatorausgang 57a und über einen Widerstand 71 mit dem Differentialverstärker-Ausgang 65c verbunden. Die Widerstände 63 und 69 haben den gleichen Widerstandswert. Die Widerstände 67 und 71 haben ebenfalls den gleichen Widerstandswert, wobei der letztere beispielsweise das Zehnfache des Widerstandswertes der Widerstände 63 und 69 beträgt.

Der invertierende Eingang 73a des Differentialverstärkers 73 ist über den Widerstand 75 mit dem Differentialverstärker-Ausgang 65c, über einen Trimmerwiderstand 77 mit dem Oszillatorausgang 57a und über einen Trimmerwiderstand 79 mit dem Differentialverstärker-Ausgang 73c verbunden. Der nicht-invertierende Eingang 73b des Differentialverstärkers 73 liegt elektrisch an Masse.

Der Differentialverstärker-Ausgang 73c ist über zwei gleichgrosse Widerstände 81, 83 mit dem invertierenden Eingang 85a, bzw. nicht-invertierenden Eingang 85b eines Differentialverstärkers 85 verbunden. Der invertierende Eingang 85a ist über einen Gegenkopplungswiderstand 87, der den gleichen Widerstandswert wie die Widerstände 81, 83 hat, mit dem Differentialverstärker-Ausgang 85c verbunden. Der nicht-invertierende Eingang 85b ist über die "Source-Drain-Strecke" eines Feldeffekt-Transistors 89 mit dem Massenanschluss 45 verbunden. Das "Gate" des Feldeffekttransistors 89 ist mit dem Ausgang 57c des Oszillators 57 verbunden.

Der Differentialverstärker-Ausgang 85c ist mit dem Eingang 89a eines Spannungs-Strom-Wandlers 89 verbunden. Dessen Anschluss 89b ist mit dem Massenanschluss 45 und dessen Ausgang 89c mit dem Stromversorgungsteil 91 sowie mit dem Anschluss 93 des Elektronikteils verbunden. Der Anschluss 95 des Elektronikteils ist ebenfalls mit dem Stromversorgungsteil 91 sowie mit dem Massenanschluss 45 verbunden. Der Stromversorgungsteil 91 ist ferner durch Leitungen, die durch Pfeile angedeutet sind, mit den verschiedenen aktiven Elementen des Elektronikteils verbunden und führt diesen beim Betrieb die erforderlichen Speisespannungen zu.

Der Anschluss 93 ist über einen Leiter des Kabels 50 und ein Anzeigeinstrument 97 mit dem einen Anschluss einer Gleichspannungsquelle 99 verbunden, deren anderer Anschluss über den anderen Leiter des Kabels 50 mit dem Anschluss 95 verbunden ist. Wie noch näher erläutert wird, bilden die Anschlüsse 93 und 95 einerseits die Signalausgänge und andererseits die Speisespannungsanschlüsse des Elektronikteils 43.

Im folgenden soll die Arbeitsweise des Elektronikteils 43 erläutert werden. Beim Betrieb erzeugt der Oszillator 57 eine sinusförmige Wechselspannung mit der Grösse $U_o$ und einer Frequenz von weniger als 10 KHz, beispielsweise 1 kHz. Diese zwischen dem Ausgang 57a und dem Anschluss 57b auftretende Wechselspannung wird dem nicht-invertierenden Differentialverstärker-Eingang 51b zugeführt. Diese Spannung wird ferner durch den Verstärker 59 ohne Phasenverschiebung verdoppelt und also phasengleich mit der dem Eingang 51b zugeführten Spannung über den Kondensator 61 dem Eingangsanschluss 47 zugeführt. Der Messwandler 41 hat bei der momentanen Kolbenstellung die Kapazität C. Wenn sich der Kolben 3 in seiner in der Figur 1 dargestellten Endstellung befindet, hat die Kapazität des Messwandlers 41 den Maximalwert $C_{max}$. Wenn sich der Kolben dagegen in seiner anderen Endstellung, an dem sich in der Figur 1 rechts befindlichen Zylinderende befindet und also so weit als möglich aus dem Zylinder herausragt, hat der Messwandler 41 zusammen mit seinen Zuleitungen die Minimalkapazität $C_{min}$.

Ferner hat der Gegenkopplungskondensator 53 die Kapazität $C_{53}$ und der Kondensator 61 die Kapazität $C_{61}$. Am Ausgang 51c des Differentialverstärkers 51 ist dann bezüglich Masse eine Wechselspannung mit der Grösse $U_a$ vorhanden. Die Ausgangsspannung hat dann den Wert

$$U_a = U_o \ (1 + (C—C_{61})/C_{53})$$

Wenn man nun die Kapazität $C_{61}$ des Kondensators 61 gleich der Minimalkapazität $C_{min}$ macht, hat die Spannung $U_a$ bei der Kolbenstellung, bei der der Messwandler die Kapazität $C_{min}$ hat, gerade den Wert $U_o$. Wenn nun der Kolben ausgehend von der genannten Endstellung tiefer in den Zylinder, d.h. in der Figur 1 nach rechts verschoben wird, steigt die Spannung $U_a$ linear mit dem Kolbenweg an. Durch den Differentialverstärker 65 wird die Differenz zwischen den Spannungen $U_a$ und $U_o$ gebildet und verstärkt. Am Ausgang 65c des Differentialverstärkers 65 erscheint also eine Wechselspannung, deren Grösse proportional zur Kapazitätszunahme $C—C_{min}$ des Messwandlers ist, die entsteht, wenn der Kolben, beginnend von seiner vorgenannten Endstellung, in der Figur 1 nach rechts verschoben wird. Falls die Kapazität des Kondensators 61 nicht genau mit der Minimalkapazität des Messwandlers übereinstimmen sollte, kann dies mittels des Trimmerwiderstandes 77 ausgeglichen werden. Mittels des Trimmerwiderstandes 79 kann die Verstärkung des Differentialverstärkers 73 eingestellt werden. Die am Ausgang 73c des Differentialverstärkers 73 vorhandene Wechselspannung wird nun den beiden Eingängen des Differentialverstärkers 85 zugeführt. Der Oszillator 57 führt dem "Gate" des Feldeffekt-Transistors 89 eine Rechteck-Wechselspannung zu, die synchron zu der am Oszillatorausgang 57a vorhandenen Sinus-Wechselspannung ist. Der Transistor 89 wird daher synchron zur letzteren abwechselnd zwischen Sperr- und Leitzustand hin- und hergeschaltet. Dadurch wird der nicht-invertierende Differentialverstärker-Eingang 85f abwechselnd zwischen dem Potential des Differentialverstärker-Ausgangs 73c und der elektischen Masse hin- und hergeschaltet. Der Differentialverstärker 85 arbeitet daher abwechselnd als nicht-invertierender und als invertierender Verstärker, so dass er die ihm zugeführte Wechselspannung demoduliert. Der Spannungs-Strom-Wandler 89 erzeugt dann einen eingeprägten Strom, bzw nimmt einen solchen auf. Dieser ist proportional zur Grösse der zugeführten, demodulierten Spannung und damit zur Kapazitätsdifferenz $C—C_{min}$ und variiert zwischen den Werten O und $I_{max}$. Der Stromversorgungsteil 91 ist so ausgebildet, dass er einen konstanten Strom mit der Grösse $I_o$ verbraucht. Der den Anschlüssen 93 und 95 von der Spannungsquelle 99 zugeführte und vom Anzeigeinstrument 97 angezeigte Strom I variiert also zwischen den Werten $I_o$ und $I_o + I_{max}$ und gibt ein Mass für die Kolbenstellung. Das Anzeigeinstrument 97 und die Spannungsquelle 95, die nur über zwei Leiter mit dem Elektronikteil 43 verbunden sind, können dann ohne weiteres weit entfernt vom letzteren angeordnet werden.

Selbstverständlich kann die Einrichtung in verschiedener Weise modifiziert werden. Beispielsweise könnte das Rohr 23 weggelassen werden, so dass die eine Elektrode des kapazitiven Messwandlers direkt durch den Kolben oder genauer gesagt, durch dessen Schaft gebildet würde.

Bei gewissen Anwendungen, etwa bei Baumaschinen, kann es erforderlich sein, dass der Zylinder bei der Kappe 7 schwenkbar am Gestell einer Maschine angelenkt wird. In diesem Fall kann der Elektronikteil statt an der Stirnseite des Zylinders auch in der Nähe des Zylinderendes an einer Umfangstelle des Zylinders angeordnet sein. Anstelle des Stiftes 35 kann dann eine radial aus dem Zylinder herausführende, gegen diesen isolierte, elektrische Durchführung vorgesehen werden.

Auch der Eingangsteil des Elektronikteils 43 kann modifiziert werden. Beispielsweise könnten der Verstärker 59 und der Kondensator 61 weggelassen werden. Falls eine Bereichumschaltung wünschenswert ist, kann diese sehr einfach realisiert werden, indem man anstelle des Gegenkopplungskondensators 53 mehrere umschaltbare Gegenkopplungskondensatoren vorsieht.

Des weiteren kann der Strom I statt zur Anzeige der Kolbenstellung zusätzlich dazu verwendet werden, über irgendwelche Steuer oder Regelelemente einen Arbeitsablauf zu steuern bzw. zu regeln.

Ferner kann natürlich der Elektronikteil ohne weiteres so ausgebildet werden, dass er statt eines eingeprägten Stromes eine Spannung erzeugt, deren Wert ein Mass für die Kolbenstellung gibt. Des weiteren könnte aber auch ein digitales, elektrisches Signal erzeugt werden, das die Verschiebung des Kolbens darstellt.

## Patentansprüche

1. Einrichtung mit einem Zylinder (1), einem verschiebbar in diesem geführten, durch ein Strömungsmittel verschiebbaren, mit einer Längsöffnung (13a) versehenen Kolben (3) und einem im wesentlichen im Zylinder (1) angeordneten, kapazitiven Messwandler (41), der zwei gegeneinander verschiebbare, elektrisch leitende Teile (23, 27) aufweist, von denen der eine am Zylinder (1) befestigt ist sowie in die Längsöffnung (13a) des Kolbens (3) hineinragt und der andere am Kolben (3) befestigt oder durch den Kolben (3) selbst gebildet ist und von denen der eine in eine Längsöffnung des andern hineinragt, wobei der eine Messwandlerteil (23) elektrisch leitend mit metallischen Teilen des Zylinders (1) und Kolbens (3) verbunden ist und der andere Messwandlerteil (27) gegen den Zylinder (1) und den Kolben (3) elektrisch isoliert sowie mit einer elektrischen Verbindung (35) aus dem Zylinder (1) herausgeführt ist, dadurch gekennzeichnet, dass der eine Messwandlerteil (27) auf seiner dem andern Messwandlerteil (23) zugewandten Fläche mit einer elektrisch isolierenden Hülle (29) versehen ist, die zusammen mit dem letztgenannten Messwandlerteil (23) einen Gleitsitz bildet, und dass die Längsöffnung des einen Messwandlerteils (23), in die der andere Messwandlerteil (27) hineinragt, durch mindestens einen den Druckausgleich ermöglichenden Durchgang mit dem Innenraum des Zylinders (1) verbunden ist.

2. Einrichtung nach Anspruch 1, dadurch gekennzeichnet, dass der am Zylinder (1) befestigte Messwandlerteil durch einen mit der isolierenden Hülle (29) versehenen elektrisch leitenden Stab (27) gebildet ist und dass der die Längsoffnung aufweisende Messwandlerteil durch ein in der Längsöffnung (13a) des Kolbens (3) angeordnetes und elektrisch leitend an diesem befestigtes Rohr (23) gebildet ist, dessen Längsöffnung in der Nähe seines befestigten Endes durch den Durchgang mit dem Innenraum des Zylinders (1) verbunden ist.

3. Einrichtung nach Anspruch 2, dadurch gekennzeichnet, dass zwischen der Aussenfläche des Rohres (23) und der Innenfläche der Längsöffnung (13a) des Kolbens (3) mindestens in demjenigen Längsabschnitt des Rohres (23), in dem der Stab (27) in dieses hineinragt, ein freier Zwischenraum vorhanden ist.

4. Einrichtung nach Anspruch 3, dadurch gekennzeichnet, dass das Rohr (23) aus einem federnd biegbaren Material besteht, so dass es durch den Stab (27) zentrierbar ist.

5. Einrichtung nach einem der Ansprüche 1 bis 4, dadurch gekennzeichnet, dass ein ausserhalb des Zylinders (1) angeordneter Elektronikteil (43) vorhanden ist, der einen Oszillator (57) zur Erzeugung einer Wechselspannung und einen kapazitiv gegengekoppelten Differential verstärker (51) mit einem invertierenden und einem nicht-invertierenden Eingang aufweist, dass der invertierende Eingang (51a) mit dem gegen den Zylinder (1) isolierten Teil (27) des Messwandlers (41) und der nicht-invertierende Eingang (51b) mit einem Ausgang (57a) des Oszillators (57) verbunden ist und dass der letztere ferner einen Anschluss (57b) aufweist, der über Teile des Zylinders (1) und Kolbens (3) elektrisch mit dem leitend mit dem Zylinder (1) verbundenen Messwandlerteil (23) verbunden ist.

6. Einrichtung nach Anspruch 5, dadurch gekennzeichnet, dass der Elektronikteil (43) ferner einen Kondensator (61) aufweist, dessen eine Elektrode ebenfalls mit dem gegen den Zylinder (1) isolierten Messwandlerteil (27) und dessen andere Elektrode mit einem Ausgang (57a) des Oszillators (57) verbunden ist, so dass der zweitgenannten Kondensatorelektrode beim Betrieb eine Wechselspannung zugeführt wird, die frequenz- und phasengleich mit der dem nicht-invertierenden Eingang (51b) zugeführten Wechselspannung, aber grösser als die letztere ist.

7. Einrichtung nach einem der Ansprüche 5 oder 6, dadurch gekennzeichnet, dass der Ausgang (51c) des kapazitiv gegengekoppelten Differentialverstärkers (51) mit den Eingängen (85a, 85b) eines weiteren Differentialverstärkers (85) verbunden ist und dass mit dem letzteren und dem Oszillator (57) verbundene und durch diesen steuerbare Schaltmittel (89) vorhanden sind, um den weiteren Differentialverstärker (85) im Takt der Oszillatorfrequenz vom invertierenden in den nicht-invertierenden Betrieb umzuschalten, so dass der weitere Differentialverstärker (85) die ihm zugeführte Wechselspannung demoduliert.

8. Einrichtung nach Anspruch 7, dadurch gekennzeichnet, dass zwischen dem Ausgang (51c) des kapazitiv gegengekoppelten Differentialverstärkers (51) und den Eingängen (85a, 85b) des zur Demodulation dienenden Differentialverstärkers (85) mindestens noch ein anderer Differentialverstärker (65, 73) dazwischen geschaltet ist.

## Revendications

1. Dispositif comportant un cylindre (1) dans lequel peut coulisser, sous l'action d'un fluide

moteur, un piston (3) pourvu d'une ouverture dans le sens longitudinal (13a); un convertisseur de mesure (41) à effet capacitif, qui présente deux parties électriquement conductrices (23, 27) pouvant coulisser en regard l'une de l'autre; l'une des parties conductrices précitées étant fixée au cylindre (1), et pénétrant dans l'ouverture longitudinale (13a) du piston (3); 1' autre partie conductrice étant fixée au piston (3) ou constituée par le piston (3) lui-même; l'une de ces parties conductrices (23) pénétrant dans une ouverture longitudinale de l'autre partie, et l'une de ces parties conductrices (23) se trouvant électriquement reliée avec des parties métalliques du cylindre (1) et du piston (3), tandis que l'autre partie conductrice (27) du convertisseur de mesure est isolée électriquement par rapport au cylindre (1) et au piston (3) et reliée par une connexion électrique (35) à l'extérieur du cylindre (1); le dispositif étant caractérisé en ce que l'une des parties conductrices (27) du convertisseur de mesure est pourvue d'une enveloppe électriquement isolante (29) sur sa face disposée en regard de l'autre partie conductrice (23) du convertisseur de mesure, cette enveloppe (29) coopérant avec la seconde partie conductrice (23) du convertisseur de mesure pour constituer un appui coulissant; et en ce que l'ouverture longitudinale de l'une des parties conductrices (23) du convertisseur de mesure, dans laquelle pénètre l'autre partie (27) du convertisseur, est reliée à l'intérieur du cylindre (1) par au moins un passage d'équilibrage de pression.

2. Dispositif conforme à la revendication 1, caractérisé en ce que la partie du convertisseur de mesure, fixée au cylindre (1), est constituée par une tige électriquement conductrice (27) revêtue de l'enveloppe isolante (29), et en ce que la partie du convertisseur de mesure, qui présente l'ouverture longitudinale, est constituée par un élément tubulaire (23) disposé dans l'ouverture longitudinale (13a) du piston (3) et fixé à ce dernier de manière à former une connexion électriquement conductrice; l'ouverture longitudinale de cet élément tubulaire étant reliée à l'intérieur du cylindre (1) par le passage précité, au voisinage de l'extrêmité de l'élément tubulaire fixée au piston.

3. Dispositif conforme à la revendication 2, caractérisé en ce qu'il comporte un espace intermédiaire libre, disposé entre la face externe de l'élément tubulaire (23) et la face interne de l'ouverture longitudinale (13a) du piston (3), au moins dans la zone longitudinale de l'élément tubulaire )23) où pénètre la tige (27).

4. Dispositif conforme à la revendication 3, caractérisé en ce que l'élément tubulaire (23) est constitué d'un matériau élastique, agissant comme un ressort, de manière à pouvoir être centré par la tige (27).

5. Dispositif conforme à l'une des revendications 1 à 4, caractérisé en ce qu'il comporte à l'extérieur du cylindre (1) un organe électronique (43) comprenant un oscillateur (57) pour produire une tension alternative, et un amplificateur différentiel (51) à contre-couplage capacitif présentant une entrée d'inversion et une entrée sans inversion; l'entrée d'inversion (51a) étant reliée à la partie (27) du convertisseur de mesure (41) qui est isolée par rapport au cylindre (1), et l'entrée sans inversion (51b) étant reliée à une sortie (57a) de l'oscillateur (57); ce dernier présentant en outre une connexion (57b) qui est reliée électriquement, par l'intermédiaire de parties conductrices du cylindre (1) et du piston (3), à la partie conductrice (23) du convertisseur de mesure, elle-même reliée au cylindre (1).

6. Dispositif conforme à la revendication 5, caractérisé en ce que l'organe électronique (43) comporte en outre un condensateur (61) ayant également une électrode reliée à la partie (27) du convertisseur de mesure, isolée par rapport au cylindre (1), tandis que l'autre électrode est reliée à une sortie (57a) de l'oscillateur (57), de telle sorte que l'électrode du condensateur mentionnée en second lieu, lorsque le dispositif fonctionne, est le siège d'une tension alternative calée en fréquence et en phase sur la tension alternative qui arrive à l'entrée sans inversion (51b), avec cependant une valeur supérieure à celle de cette dernière tension.

7. Dispositif conforme à l'une des revendications 5 ou 6, caractérisé en ce que la sortie (51c) de l'amplificateur différentiel à contre-couplage capacitif (51) est reliée aux entrées (85a, 85b) d'un autre amplificateur différentiel (85), ce dernier, ainsi que l'oscillateur (57), étant reliés à des moyens de commutation (89) commandés par l'oscillateur, pour faire passer l'autre amplificateur différentiel (85) du régime de fonctionnement inversé au régime de fonctionnement non inversé, au rythme de la fréquence de l'oscillateur, de telle sorte que l'autre amplificateur différentiel (85) assure la démodulation de la tension alternative qui lui parvient.

8. Dispositif conforme à la revendication 7, caractérisé en ce qu'il comporte encore au moins un amplificateur différentiel supplémentaire (65, 73), monté entre la sortie (51c) de l'amplificateur différentiel à contre-couplage capacitif (51) et les entrées (85a, 85b) de l'autre amplificateur différentiel (85) assurant la démodulation.

**Claims**

1. Equipment with a cylinder (1), a piston (3) guided displaceably therein, displaceable by a flow medium and provided with a longitudinal opening (13a), and a capacitive measurement transducer (41), which is arranged substantially in the cylinder (1) and displays two electrically conducting parts (23, 27), which are displaceable relative to each other and of which the one is fastened to the cylinder (1) as well as projects into the longitudinal opening (13a) of the piston (3) and the other is fastened to the piston (3) or is formed by the piston (3) itself and of which the one projects into a longitudinal opening of the other, wherein the one measurement transducer part (23) is electrically conductively connected with the metallic parts of the cylinder (1) and piston (3) and the other measurement transducer part (27) is electrically insulated from the cylinder (1) and the piston (3) as well as led out of the cylinder (1) by an electrical connection (35), characterised thereby, that the one measurement transducer part (27) is provided on its surface facing the other measurement transducer part (23) with an electrically insulating sheath (29), which together with the last named measurement transducer part (23) forms a sliding seat and that the longitudinal opening of the one measurement transducer part (23), into which the other measurement transducer part (27) projects, is connected with the internal space of the cylinder (1) through at least one passage making the pressure equalisation possible.

2. Equipment according to claim 1, characterised thereby, that the measurement transducer part fastened to the cylinder (1) is formed by an electrically conducting rod (27) provided with the insulating sheath (29) and that the measurement transducer part displaying the longitudinal opening is formed by a tube (23), which is arranged in the longitudinal opening (13a) of the piston (3) and electrically conductively fastened thereto and the longitudinal opening of which is connected in the proximity of its fastened end through the passage with the internal space of the cylinder (1).

3. Equipment according to claim 2, characterised thereby, that a free gap is present between the external surface of the tube (23) and the internal surface of the longitudinal opening (13a) of the piston (3) at least in that length portion of the tube (23), in which the rod (27) projects into this.

4. Equipment according to claim 3, characterised thereby, that the tube (23) consists of a resiliently flexible material so that it is centerable by the rod (27).

5. Equipment according to one of the claims 1 to 4, characterised thereby, that an electronic part (43) is present, arranged externally of the cylinder (1) and displays an oscillator (57) for the generation of an alternating voltage and a capacitively fed-back differential amplifier (51) with an inverting input and a non-inverting input, that the inverting input (51a) is connected with the part (27) of the measurement transducer (41) insulated from the cylinder (1) and the non-inverting input (51b) is connected with an output (57a) of the oscillator (57) and that the latter furthermore displays a terminal (57b), which is electrically conductively connected through parts of the cylinder (1) and piston (3) with the measurement transducer part (23) connected with the cylinder (1).

6. Equipment according to claim 5, characterised thereby, that the electronic part (43) furthermore displays a capacitor (61), the one electrode of which is likewise connected with the measurement transducer part (27) insulated from the cylinder (1) and the other electrode of which is connected with an output (57a) of the oscillator (57) so that an alternating voltage, which is equal in frequency and phase, but greater than the alternating voltage fed to the non-inverting input (51b), is fed in operation to the capacitor electrode mentioned secondly.

7. Equipment according to one of the claims 5 or 6, characterised thereby, that the output (51c) of the capacitively fed-back differential amplifier (51) is connected with the inputs (85a, 85b) of a further differential amplifier (85) and that control means (89), connected with the latter and the oscillator (57) and controllable by this, are present to switch the further differential amplifier (85) over from the inverting to the non-inverting operation in the rhythm of the oscillator frequency so that the further differential amplifier (85) demodulates the alternating voltage fed to it.

8. Equipment according to claim 7, characterised thereby, that at least one other differential amplifier (65, 73) is still connected between the output (51c) of the capacitively fed-back differential amplifier (51) and the inputs (85a, 85b) of the differential amplifier (85) serving for the demodulation.

0 005 478

Fig. 1

Fig. 2

Fig. 3